# EUROPEAN PATENT APPLICATION

(11) **EP 4 464 165 A1**
(43) Date of publication of application: **20.11.2024**
(21) Application number: 24175775.6
(22) Date of filing: 14.05.2024
(51) Int. Cl.: A23J 1/10, A23J 3/30

(54) **PROCESS FOR DESALINATING PROTEIN HYDROLYSATES OF ANIMAL ORIGIN**

(30) Priority: 16.05.2023 IT 202300009870
(71) Applicant: Sicit Group S.p.A., 36072 Chiampo VI (IT)
(72) Inventor: ASNICAR, MANUEL, 36072 CHIAMPO (VI) (IT); CATTAZZO, ALBERTO, 37030 COLOGNOLA AI COLLI (VR) (IT); DALLA BENETTA, ANDREA, 36071 ARZIGNANO (VI) (IT); NERESINI, MASSIMO COSTANTINO, 36072 CHIAMPO (VI) (IT); ROCCHIO, GABRIELE, 36072 CHIAMPO (VI) (IT)
(74) Representative: Bianchetti & Minoja with Trevisan & Cuonzo IPS SRL

(57) **Abstract**

The invention relates to a process for obtaining a desalinated protein broth starting from a substrate selected from a by-product of animal origin or a waste of animal origin.

## Description

### Technical Field of the Invention

The invention relates to a process for desalinating products deriving from animal waste, preferably protein hydrolysates extracted from residues of hide processing or from tanning waste.

### Background

The fleshing is a by-product of the hide processing, therefore abundantly present in the tanning environment. Even if it is originally a waste product, said fleshing, due to its characteristics, can be used to produce further products. In fact, it is often used for the production of glue or organic manures; but said fleshing, due to its high content of organic nitrogen, can be used for the production, after previous extraction, of bio-stimulating products, such as protein hydrolysates.

However, the fleshing contains significant amounts of sodium chloride (NaCl). In fact, this salt is used, in the tanning industry, both to preserve the fresh hides, coming from the meat industry, allowing the transport thereof to the tanneries, and in the first processing steps within these last.

This salt which is present in the fleshing constitutes an impurity to be discharged, since, when it is not correctly discharged, it is found in the final protein hydrolysate, deriving from the fleshing, affecting the quality thereof.

A membrane filtration step is used in order to remove the dissolved salts in most of the known processes; however this results to be inefficient when carried out on hydrolyzed products.

This entails a poor efficacy in the discharge of the undesired components and a huge loss of proteins and amino acids within the permeate of the membrane filtration.

Therefore, there is the need to provide a simple, efficient, and sustainable process allowing to reduce sodium chloride in the protein hydrolysate thus improving its quality and making it more versatile and therefore to provide a re-usable salt as a by-product, with a view to a complete circularity.

### Summary of the Invention

The present invention relates to a process for obtaining a desalinated protein broth starting from a substrate (raw material) selected from a substrate that is a by-product of animal origin or a waste (debris material) of animal origin, comprising the steps of:
a1) optional storage of the raw material;
b1) grinding with homogenization, optional dilution of the raw material, and heating optionally in an oxidizing environment;
c1) acid hydrolysis by adding an acid selected from sulfuric acid, hydrochloric acid, nitric acid, acetic acid, preferably sulfuric acid;
d1) first separation by means of a technique selected from filtration, centrifugation, and decantation, preferably centrifugation, to obtain at least three phases:
   i) fat phase,
   ii) salty aqueous phase (or acidic broth), and
   iii) solid phase (or sludge);
e1) pre-treatment of phase ii) (or acidic broth), by adding a filtration adjuvant to obtain a homogeneous salty aqueous phase ii) (or acidic broth); wherein a salt corrector selected from the group comprising, or consisting of, Na₂SO₄, NaNO₃, CH₃COONa, CaCl₂, KCl, and MgCl₂, preferably CaCl₂, and a pH corrector which is a base selected from the group comprising, or consisting of, Ca(OH)₂, NaOH, Mg(OH)₂, KOH, NH₃, preferably Ca(OH)₂, more preferably to a pH between 6.0 and 8.0, even more preferably equal to 7.0, are further added;
f1) second separation by means of a technique selected from filtration, centrifugation, and decantation, preferably filtration, to separate the residues of phase iii) and obtain a homogeneous salty aqueous phase ii) (or neutral broth) substantially or completely free of suspended solids;
g1) optional addition of a precipitating agent to the salty aqueous phase ii) of step f1), to obtain a suspension iv);
h1) optional separation of the suspension iv) of step g1) by means of a technique selected from filtration, centrifugation, and decantation, preferably nanofiltration, to separate the solid residues from the suspension iv) of step g1) and obtain a homogeneous salty aqueous phase ii) (or neutral broth) substantially or completely free of suspended solids;
11) first membrane filtration of the homogeneous salty aqueous phase ii) (or neutral broth) of step f1) and of optional step h1) to obtain a homogeneous and partially desalinated broth v) and a salty permeate (diluted brine) vi);
m1) optional second membrane filtration of the homogeneous and partially desalinated broth v) of step 11) to obtain two fractions: a final homogeneous and desalinated broth vii) and a salty permeate viii);
n1) filtration of the salty permeate vi) of step 11) and/or of the salty permeate viii) of step m1) to obtain a crude saline concentrate (raw brine) and permeated desalinated water ix);
o1) concentration and purification of the crude saline concentrate to obtain a final saline concentrate (brine or saturated solution) and optionally crystallization of said final saline concentrate (brine or saturated solution) to obtain sodium chloride; and
p1) optional mixing of the solid phase iii) obtained in step d1), the residues of phase iii) obtained in step f1) and the final homogeneous and desalinated broth vii) obtained in step m1), and subsequent hydrolysis and sterilization of the mixture thus obtained to obtain a desalinated protein hydrolysate.

### Brief Description of Figures

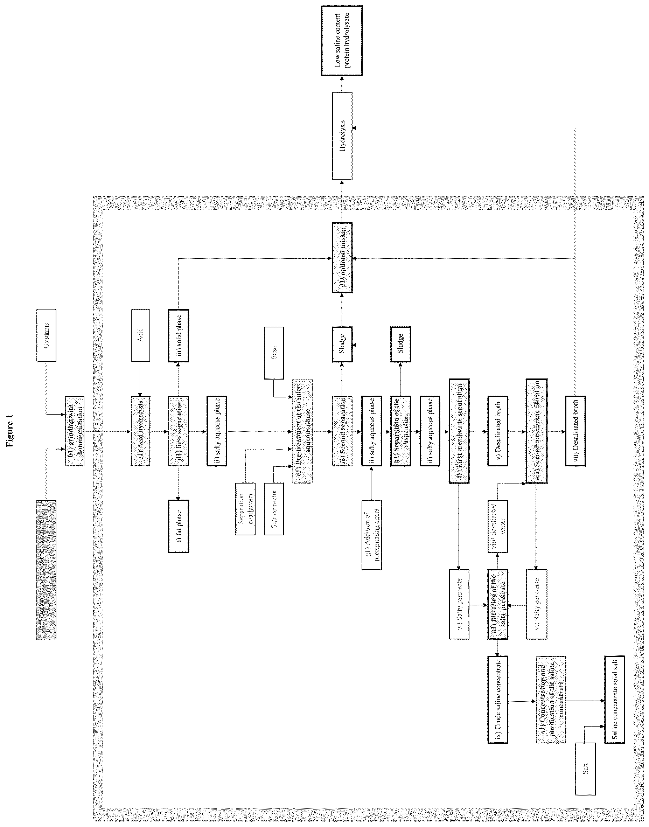

Figure 1 shows the figurative scheme of the process of the invention.

### Detailed Description of the Invention

It was surprisingly found that pre-treating a substrate (raw material) selected from a substrate that is a by-product of animal origin (B.A.O.), preferably fleshing, or a waste (debris material) of animal origin, according to the process described below, it is possible to make the tanning process completely circular and eco-friendly and, at the same time, to obtain an intermediate substrate from which a protein hydrolysate usable as a bio-stimulating product can be obtained.

In the present invention, with the following terms it is meant:
- "desalinated" a salt-depleted hydrolysate and/or a hydrolysate with a low salt content;
- "by-product of animal origin" (B.A.O.) the sub-cutaneous tissue deriving from the animal hide scraping operations before being subjected to the tanning operations, these operations are termed "skiving," such as the fleshing, as well as the animal hide residues before being subjected to the tanning process (*e.g.* fur);
- "skiving" is a mechanical operation aimed at removing the subcutaneous tissues and the fat in excess which remain attached to the hide during the flaying of the animal;
- "waste" or "debris material" of animal origin means the residue deriving from the shaving of the animal hides already subjected to a tanning process;
- "fleshing" a residue of connective and adipose tissue removed from the meat side of the hides from a machine called skiver, following the shaving operation and previously to the tanning of the hides;
- "homogeneous" material obtained after the homogenization step;
- "reverse osmosis" the process wherein the passage of a solvent from a more concentrated solution to a less concentrated solution is forced, obtained by applying a pressure higher than the osmotic pressure to the more concentrated solution. Said reverse osmosis is carried out with a membrane withholding the solute at one side preventing the passage thereof and allowing to achieve the pure solvent from the other side. This phenomenon is not spontaneous and requires the completion of a mechanical work equal to that required to nullify the effect of the osmotic pressure;
- "osmotic pressure" colligative property associated to solutions. When two solutions with the same solvent, but with different solute concentrations, are separated from a semipermeable membrane (*i.e*. which allows the solvent molecules but not the solute molecules to pass through), the solvent molecules move from the solution with a lower solute concentration (and therefore with a higher solvent concentration) to the solution with a higher solute concentration (and therefore with a lower solvent concentration), making equal (or better, making close) the concentrations of the two solutions; the pressure applied by the solvent particles, moving from the solution having a lower concentration to the solution having a higher concentration, is said "osmotic pressure";
- "salt corrector" or "ionic agent for charge balancing" any salt or chemical compound comprising at least one ionic bond, capable of releasing charges during the reverse osmosis process and more effectively balancing the molar ratios of the ions of interest, such as Na⁺ and Cl⁻ for sodium chloride.
- "nanofiltration" a membrane separation process used for the treatment of liquids (including water). The nanofiltering membranes (NF) have a molecular weight cut-off (MWCO) ranging from 150 to 1000 Daltons and allow the preferential permeation of monovalent anions and cations (*i.e*. Na⁺, Cl⁻), while more effectively withholding polyvalent anions and cations (Ca²⁺, SO₄²⁻).
- "ultrafiltration" (UF) a filtration process operated on a semipermeable membrane characterized by a molecular weight cut-off (MWCO) ranging from 1000 to 5000 Daltons.
- "diafiltration" a process allowing to separate low molecular weight solutes (such as salts) from a solution using membranes. In this way, the technique can be exploited to achieve the material contained in the permeate or to purify the withheld flow. Usually, the process involves an initial concentration step followed by the real diafiltration, carried out by adding a volume of solvent and further filtration with membranes. In this way, the fluid withheld by the membranes in the first filtration step is "washed" by the volume of the solvent added in the diafiltration.

Object of the invention is a process for obtaining a desalinated protein broth starting from a substrate (raw material) selected from a substrate that is a by-product of animal origin or a waste (debris material) of animal origin, comprising the steps of:
a1) optional storage of the raw material;
b1) grinding with homogenization, and optional dilution of the raw material, and heating optionally in an oxidizing environment;
c1) acid hydrolysis by adding an acid selected from sulfuric acid, hydrochloric acid, nitric acid, acetic acid, preferably sulfuric acid;
d1) first separation by means of a technique selected from filtration, centrifugation, and decantation, preferably centrifugation, to obtain at least three phases:
   i) fat phase,
   ii) salty aqueous phase (or acidic broth), and
   iii) solid phase (or sludge);
e1) pre-treatment of the salty aqueous phase ii) (or acidic broth), by adding a filtration adjuvant to obtain a homogeneous salty aqueous phase ii) (or acidic broth); wherein a salt corrector selected from the group comprising, or consisting of, Na₂SO₄, NaNO₃, CH₃COONa, CaCl₂, KCl, and MgCl₂, preferably CaCl₂, and a pH corrector which is selected from the group comprising, or consisting of, lime (Ca(OH)₂), NaOH, Mg(OH)₂, KOH, NH₃, preferably it is lime (Ca(OH)₂), more preferably to a pH between 6.0 and 8.0, even more preferably equal to 7.0, are further added;
f1) second separation by means of a technique selected from filtration, centrifugation, and decantation, preferably filtration, to separate the residues of phase iii) and obtain a homogeneous salty aqueous phase ii) (or neutral broth);
g1) optional addition of a precipitating agent to the salty aqueous phase ii) of step f1), to obtain a suspension iv);
h1) optional separation of the suspension iv) of step g1) by means of a technique selected from filtration, centrifugation, and decantation, preferably nanofiltration, to separate the solid residues from the suspension iv) of step g1) and obtain a homogeneous salty aqueous phase ii) (or neutral broth) substantially or completely free of suspended solids;
11) first membrane filtration of the homogeneous salty aqueous phase ii) (or neutral broth) of step f1) and of optional step h1) to obtain a homogeneous and partially desalinated broth v) and a salty permeate (diluted brine) vi);
m1) optional second membrane filtration of the homogeneous and partially desalinated broth v) of step 11) to obtain two fractions: a final homogeneous and desalinated broth vii) and a salty permeate viii);
n1) filtration of the salty permeate vi) of step 11) and/or of the salty permeate viii) of step m1) to obtain a crude saline concentrate (raw brine) and permeated desalinated water ix);
o1) concentration and purification of the crude saline concentrate to obtain a final saline concentrate (brine or saturated solution) and optionally crystallization of said final saline concentrate (brine or saturated solution) to obtain sodium chloride; and
p1) optional mixing of the solid phase iii) obtained in step d1), the residues of phase iii) obtained in step f1) and the final homogeneous and desalinated broth vii) obtained in step m1), and subsequent hydrolysis and sterilization of the mixture thus obtained to obtain a desalinated protein hydrolysate.

According to a preferred aspect, the process of the invention can further comprise a further step m1) of further filtration of the salty permeated broth viii) to obtain a final homogeneous and desalinated broth viii-bis).

The inventors have further surprisingly found that the use of a salt corrector in a pre-treating step of the salty broth before two separated filtration steps, preferably a nanofiltration and a subsequent diafiltration, allows to obtain a final desalinated product and a salty permeate with higher purity.

Finally, it was surprisingly found that using two separate membrane filtration steps before the hydrolysis process minimizes the loss of organic material (free amino acids and small peptides) in the permeate, since the broth subjected to the treatment (very slightly hydrolyzed) contains a very low amount thereof, as it will be further evident from the Experimental.

Moreover, the first filtration step allows to advantageously discharge the residual suspended solids and the heterogeneous phases (*i.e.* fat substance), which will prevent the correct membrane filtration.

The raw material is selected from a substrate which is a by-product of animal origin or a waste (debris material) of animal origin, preferably a by-product of animal origin, more preferably is a sub-cutaneous tissue deriving from the scraping operations of animal hides before being subjected to a tanning process, preferably it is a fleshing or consists of animal hide residues before being subjected to a tanning process, even more preferably it is a fleshing.

According to a preferred aspect, the fleshing is a by-product of animal origin (B.A.O.) having the following average composition:
- 75-85% water,
- 5-10% animal protein,
- 7-14% animal fat, and
- 2-6% various salts.

The animals to obtain the raw material B.A.O. therefrom, preferably the fleshing, can be bovines, ovines, pigs, such as calves, lambs, pigs, goats, and rams.

Such raw material B.A.O is withdrawn from tanneries and placed in a suitable storing tank in an optional storing step a1). Afterwards, the raw material is grinded, homogenized, optionally diluted, and heated optionally in an oxidizing environment in a step b1).

Said step b1) can be facilitated by the presence of lime (Ca(OH)₂) in the fleshing itself, since it acts as a disaggregant of the protein material even at room temperature.

In step b1) the optional oxidizing environment can be obtained by adding an oxidizing compound selected from the group comprising or consisting of H₂O₂, NaClO, O₃, preferably it is H₂O₂, more preferably it is H₂O₂ in a concentration between 0.25% and 5% w/w (weight/weight).

In step b1) the grinding and homogenization can be performed at a temperature from 50-100 °C, preferably from 50-80 °C, more preferably equal to 80 °C.

In step b1) the grinding and homogenization can be performed for a time from 1 to 3 hours, preferably from 1 to 2, more preferably equal to 1.

Step b1) has the aim to obtain a homogeneous material from the chemical composition and the size point of view, helping therefore the reaction yield of the subsequent acid hydrolysis step c1).

The process of the invention comprises an acid hydrolysis in step c1) by adding an acid preferably selected from sulfuric acid, hydrochloric acid, nitric acid, acetic acid, preferably sulfuric acid.

In step c1) the acid, preferably the sulfuric acid, can be added until a pH from 1 to 6, preferably a pH between 2 and 5, more preferably 4.5, is reached. Preferably said step c1) can be carried out at a temperature ranging from 50 to 100 °C, preferably from 70 to 90 °C, and for a time from 1 to 3 hours, preferably from 1 to 2 hours, more preferably equal to 1 hour.

According to a preferred aspect of the invention, the sulfuric acid is in a concentration ranging from 1 to 15% by weight, preferably from 1 to 10% by weight, more preferably is 5% by weight with respect to the total weight of the mixture.

Step c1) of acid hydrolysis allows to obtain the acid pre-disaggregation of the animal proteins and the fat separation, both contained in the waste raw material, therefore facilitating the following separation step d1).

Step d1) of first separation is carried out preferably by centrifugation and can be carried out in a centrifuge at a temperature from 70 to 100 °C, preferably at 80-90 °C.

In step d1), the phase iii), *i.e.* the solid phase (or sludge), is separated from phases i) and ii) and only the phase ii), *i.e.* the salty aqueous phase (or acidic broth) is subjected to the following steps, while the fat phase i) can be sent to a refining plant.

Therefore, step d1) is useful in order to separate the waste phase (*i.e.* the solid phase iii)) from the fat phase i), which will be subsequently refined, and from the phase ii) (acidic broth), which will undergo the following steps of the process of the invention.

The method of the invention comprises a step e1) of pre-treatment of phase ii) (or acidic broth), to obtain a homogeneous salty aqueous phase ii) (or acidic broth) by adding a filtration adjuvant, a salt corrector selected from the group comprising, or consisting of, Na₂SO₄, NaNO₃, CH₃COONa, CaCl₂, KCI, and MgCl₂, preferably CaCl₂, and a pH corrector.

Due to step e1) it is possible to obtain the precipitation of the calcium sulphate, the pH regulation, and to facilitate the subsequent filtration.

The pH corrector of step e1) can be a base selected from the group comprising, or consisting of, Mg(OH)₂, NaOH, KOH, NH₃, and lime (Ca(OH)₂), preferably it is lime (Ca(OH)₂), more preferably to a pH between 6.0 and 8.0, even more preferably equal to 7.0.

Said step e1) can be carried out at a temperature from 50 to 100 °C, preferably from 80 to 90 °C, for a time from 1 to 3 hours, preferably 1 hour.

Preferably the filtration adjuvant of step e1) is calcium carbonate. The use of the filtration adjuvant has the aim to absorb the residues of the fat phase present in the broth and any potential suspended protein or inorganic solids.

In step e1) the salty aqueous phase ii) (or acidic broth) of step d1) is added with a salt corrector or ionic corrector to better balance the molar ratios of the ions of interest, such as Na⁺ and Cl⁻ for the sodium chloride.

The salt corrector of step e1) can be a salt selected from the group comprising, or consisting of, Na₂SO₄, NaNO₃, CH₃COONa, CaCl₂, KCI, and MgCl₂, preferably it is CaCl₂.

Preferably, the salt corrector of step e1) is added at a temperature from 50 to 100°C, for a time from 1 to 3 hours.

The addition of at least a salt for the equimolar balance of the ions of interest (Na⁺ and Cl⁻) in step e1) allows to obviate the problem of the imbalance of said two ions, present in the salty aqueous phase ii) (or acidic broth) of step d1) and due to the previous treatments and equals, in moles, the charges of the two ions. This allows to have a higher permeation efficiency of the sodium chloride (NaCl) through the filtration membrane, preferably nanofiltration, of step h1) and therefore to increase the purity of the final salt/brine and to increase the reduction of NaCl in the final homogeneous desalinated broth vii), which can be subsequently hydrolyzed, at the end of step m1). Another advantage of the addition of the salt corrector is to improve the retention of the organic fraction and of other anions, such as sulphate.

Step f1) of second separation is carried out by means of a technique selected from filtration, centrifugation, and decantation, preferably filtration, to separate the residues of phase iii) and obtain a homogeneous salty aqueous phase ii) (or neutral broth). This step allows to obtain a homogeneous aqueous phase ii), being substantially free of solid residues, which could clog the membranes of the following filtration steps.

Step g1) comprises adding to the aqueous phase ii) of step f1) a precipitating agent, to remove the calcium and/or magnesium ions (Ca²⁺ and/or Mg²⁺) which, in the following membrane filtration 11), could form insoluble salts. Said insoluble salts, precipitating, could clog the membrane pores.

Preferably, said precipitating agents of step g1) are selected from the group comprising, or consisting of, H₃PO₄, NaH₂PO₄, Na₂HPO₄, Na₃PO₄, CO₂, NaHCO₃, Na₂CO₃, oxalic acid, sodium oxalate, KH₂PO₄, K₂HPO₄, K₃PO₄, KHCO₃, K₂CO₃, potassium oxalate.

In step g1) a suspension iv) is therefore formed.

Step h1) of separation of the suspension iv) of step g1) by means of a technique selected from filtration, centrifugation, and decantation, preferably nanofiltration, is aimed to separate the residues of step g1) and obtain a homogeneous salty aqueous phase ii) (or acidic broth) substantially or completely free of suspended solids.

Optionally, after step h1) and before step 11) a further step h2) is present and it can be carried out to discharge the residual suspended solids. In fact, without this treatment, the following membrane filtration, *i.e.* the filtration step m1), preferably a diafiltration, of the process of the invention could not be possible, due to suspended solids and heterogeneous phases (e.g. fat substance), which could clog the membranes themselves.

This optional step h2) consists of a membrane filtration of the microfiltration type or a filtration by filtering means, for example diatomaceous earth.

The first membrane filtration step 11) can be carried out by means of a technique selected from the group comprising, or consisting of, microfiltration, nanofiltration, and ultrafiltration, preferably nanofiltration. This step removes the sodium chloride (NaCl) as a solution. A homogeneous and partially desalinated broth v) and a salty permeate (diluted brine) vi) are obtained.

The optional second membrane filtration m1) of the homogeneous and partially desalinated broth v) of step 11) to obtain two fractions: a final homogeneous and desalinated broth vii) and a salty permeate viii), can be carried out by means of a technique selected from the group comprising, or consisting of, microfiltration, nanofiltration, and ultrafiltration (diafiltration), preferably diafiltration.

Said optional membrane filtration m1) is a step which can be repeated several times, and in this embodiment, the method of the invention provides a first filtration step 11), preferably a nanofiltration, at least a second filtration step m1), preferably a diafiltration, and at least a third filtration step m1'), preferably a diafiltration, before the following step n1).

The filtration step n1) of the salty permeate vi) of step 11) or of the salty permeate viii) of step m1) can be carried out by means of a technique selected from the group comprising, or consisting of, ultrafiltration (diafiltration), nanofiltration, reverse osmosis and evaporation, preferably reverse osmosis, to obtain a crude saline concentrate (raw brine) and permeated desalinated water ix).

By means of the filtration treatment n1), preferably reverse osmosis, the salty permeate (diluted brine) vi) of step 11) and the salty permeate viii) of step m1) are filtered and concentrated to obtain a crude saline concentrate (raw brine) and permeated desalinated water ix).

The permeated desalinated water ix) in excess is therefore free of impurities and can be re-used within the method of the invention in any one of steps b1) and m1). Afterwards, a step o1) of concentration and purification of the crude saline concentrate (brine or saturated solution) to obtain a final saline concentrate (brine or saturated solution) and optionally crystallization of said final saline concentrate (brine or saturated solution) to obtain sodium chloride, follows.

Preferably said step o1) of concentration and purification can be carried out by means of a technique selected from the group comprising, or consisting of, crystallization, purification by active carbons, purification by bleaching earths, such as aluminum hydro-silicates containing Mg, Ca, Fe, which adsorb colored impurities from liquids, and purification by polyvinylpolypyrrolidone (PVPP).

In the optional mixing, hydrolysis, and sterilization step p1) to obtain a desalinated protein hydrolysate, the hydrolysis can be carried out at a pH between 10 and 13, for a time between 3 and 5 hours and at a temperature between 90 and 145 °C.

In a preferred embodiment of the invention, the process can comprise further steps of:
r1) calcium reduction;
s1) refining;
t1) concentration;
v1) optional drying by a spray-drier or granulation.

The step of calcium abatement r1) can be carried out by adding ammonium bicarbonate, potassium bicarbonate, sodium bicarbonate, ammonium carbonate, potassium carbonate, sodium carbonate to the CO₂ hydrolyzed broth.

The refining or purification s1) can be carried out with carbon active filters.

The step 11) of concentration can be carried out up to bring the mixture to a dry matter content of 55-90%.

An optional step v1) of drying by a spray-drier or granulation can follow.

The Examples below further illustrate the invention.

### Examples

### Materials and Methods

The fleshing used in the Examples is a by-product of animal origin having the following average composition:
- 75-85% water,
- 5-10% animal protein,
- 7-14% animal fat, and
- 2-6% various salts.

### Dry matter Determination (TGA01)

The determination was performed by drying in an oven at a temperature of 105 °C until a constant weight is reached.

### Reference: AOAC 967.03

### CEN/TC 455 WG4 N0039

### Total Nitrogen and Carbon Determination (CNLECO01)

The method is based on the complete combustion of the sample in the presence of oxygen. To obtain a complete oxidation, the sample is carried by a helium flow through a column filled with a catalyst, chromium oxide. The nitrogen oxides formed in the column are then reduced in a copper column withholding oxygen as well. The formed substances, N₂, CO₂ and H₂O, pass through a filter withholding water. CO₂ and N₂ are separated by column chromatography and the analysis of the combustion products is carried out by gas-chromatography (elemental analysis).

### Reference: UNI EN 13654-2:2001

### Ammonium Nitrogen Determination (N03)

1. The method provides the distillation of ammonia in boric acid solutions. The concentration is determined by an acid-base titration.
   Reference: EPA 350.2
2. The content is determined by ionic chromatography after dissolution in water. Reference: Application note Dionex n. 141.
   ASTM D6919
   DIN EN ISO 14911

### Organic Nitrogen Determination (calculated)

The organic nitrogen content is calculated subtracting the ammonium content to the total nitrogen content expressed in the same unit of measurement. The amino acid and peptide total content is calculated as organic nitrogen x 6.25.

### Calcium and Sodium Content Determination (HP04)

The content is determined by ionic chromatography after dissolution in water.
Reference: Application note Dionex n. 141.
   ASTM D6919
   DIN EN ISO 14911
Chloride and Sulphate Content Determination (HP04D)
The content is determined by ionic chromatography after dissolution in water.
Reference: EPA 300.0
   AOAC 993.30

### Example 1 - Preparation of a desalinated protein broth by a single step g 1) of membrane filtration without addition of a salt corrector and by a final crystallization in an evaporator under vacuum

The desalinated protein broth was prepared as described below according to a process comprising the steps of:
a1) 100 kg of fleshing, of the type described above, from tanneries was provided and deposited in a suitable storage tank;
b1) dilution with water, homogenization, and grinding at 50-100 °C for a time from 1 to 3 hours; oxidation/stripping of the sulphides in an oxidizing environment, *i.e.* in H₂O₂ at a concentration of 1% w/w;
c1) acid hydrolysis by 5% by weight sulphuric acid to pH = 4.5 at a temperature of 50-100 °C for a time from 1 to 3 hours;
d1) first separation by centrifugation at 80-90 °C and obtaining of three phases: i) fat phase, ii) salty aqueous phase (or acidic broth), and iii) solid phase (or sludge);
e1) pre-treatment of the salty aqueous phase ii) (or acidic broth) by 5 kg of calcium carbonate (CaCO₃) as a filtration adjuvant, 0.65 kg of lime (Ca(OH)₂) as a base, at a temperature from 50 to 100 °C, for a time from 1 to 3 hours;
f1) second separation by filtration at 80-90 °C;
11) membrane nanofiltration with a cut-off of 150-300 Da to obtain: 50 kg of a homogeneous and partially desalinated broth v) and 50 kg of a salty permeate (diluted brine) vi).
n1) filtration by reverse osmosis of the salty permeate vi) of step 11) to obtain a crude saline concentrate (raw brine), having a dry residue of 8%;
o1) concentration and purification of the crude saline concentrate (raw brine) to obtain a final saline concentrate (brine or saturated solution) and crystallization of said saline concentrate (brine or saturated solution) by crystallization in an evaporator under vacuum, to obtain sodium chloride (NaCl).

### Example 2 - Preparation of a desalinated protein broth by a double filtration step, a first nanofiltration (11) and a second nanofiltration (or diafiltration) m1) without addition of a salt corrector and by a final crystallization in an evaporator under vacuum

The desalinated protein broth was prepared as described below:
a1) 100 kg of fleshing, of the type described above, from tanneries was provided and deposited in a suitable storage tank;
b1) dilution with water, homogenization, and grinding at 50-100 °C for a time from 1 to 3 hours; oxidation/stripping of the sulphides in an oxidizing environment, *i.e.* in H₂O₂ at a concentration of 1% w/w;
c1) acid hydrolysis by 5% by weight sulphuric acid to pH = 4.5 at a temperature of 50-100 °C for a time from 1 to 3 hours;
d1) first separation by centrifugation at 80-90 °C and obtaining of three phases: i) fat phase, ii) salty aqueous phase (or acidic broth), and iii) solid phase (or sludge);
e1) pre-treatment of the salty aqueous phase ii) (or acidic broth) by 5 kg of calcium carbonate (CaCO₃) as a filtration adjuvant, 0.65 kg of lime (Ca(OH)₂) as a base, at a temperature from 50 to 100 °C, for a time from 1 to 3 hours;
f1) second separation by filtration at 80-90 °C;
11) membrane nanofiltration with a cut-off of 150-300 Da to obtain: 50 kg of a homogeneous and partially desalinated broth v) and 50 kg of a salty permeate (diluted brine) vi). 50 kg of demineralized or osmotized water are added to the homogeneous and partially desalinated broth v).
m1) membrane nanofiltration (diafiltration) with a cut-off of 150-300 Da of the homogeneous and partially desalinated broth v) of step 11) to obtain further two fractions: 50 kg of a final homogeneous and desalinated broth vii) and 50 kg of a salty permeate viii);
n1) filtration by reverse osmosis of the salty permeate vi) of step 11) and of the salty permeate viii) of step m1), to obtain a crude saline concentrate (raw brine) having a dry residue of 8%;
o1) concentration and purification of the crude saline concentrate (raw brine) and crystallization of said saline concentrate (brine or saturated solution) by crystallization in an evaporator under vacuum to obtain a final saline concentrate (brine or saturated solution) and sodium chloride (NaCl).

Both the filtration steps were ameliorative and required to obtain a final hydrolyzed broth of high quality (as further evident from Example 4).

### Example 3 - Preparation of a desalinated protein broth by a double filtration step, a first nanofiltration (11) and a second nanofiltration (or diafiltration) m1) and by a final purification with active carbons

The desalinated protein broth was prepared as described below:
a1) 100 kg of fleshing, of the type described above, from tanneries was provided and deposited in a suitable storage tank;
b1) dilution with water, homogenization, and grinding at 50-100 °C for a time from 1 to 3 hours; oxidation/stripping of the sulphides in an oxidizing environment, *i.e.* in H₂O₂ at a concentration of 1% w/w;
c1) acid hydrolysis by 5% by weight sulphuric acid to pH = 4.5 at a temperature of 50-100 °C for a time from 1 to 3 hours;
d1) first separation by centrifugation at 80-90 °C and obtaining of three phases: i) fat phase, ii) salty aqueous phase (or acidic broth), and iii) solid phase (or sludge);
e1) pre-treatment of the salty aqueous phase ii) (or acidic broth) by 5 kg of calcium carbonate (CaCO₃) as a filtration adjuvant, 0.65 kg of lime (Ca(OH)₂) as a base, at a temperature from 50 to 100 °C, for a time from 1 to 3 hours;
f1) second separation by filtration at 80-90 °C;
11) membrane nanofiltration with a cut-off of 150-300 Da to obtain: 50 kg of a homogeneous and partially desalinated broth v) and 50 kg of a salty permeate (diluted brine) vi). 50 kg of demineralized or osmotized water are added to the homogeneous and partially desalinated broth v).
m1) membrane nanofiltration (diafiltration) with a cut-off of 150-300 Da of the homogeneous and partially desalinated broth v) of step 11) to obtain further two fractions: 50 kg of a final homogeneous and desalinated broth vii) and 50 kg of a salty permeate viii);
n1) filtration by reverse osmosis of the salty permeate vi) of step 11) and of the salty permeate viii) of step m1), to obtain a crude saline concentrate (raw brine) having a dry residue of 8%;
o1) concentration and purification of the crude saline concentrate (raw brine) by active carbons to obtain a final saline concentrate (brine or saturated solution).

Both the filtration steps were ameliorative and required to obtain a final hydrolyzed broth of high quality (as further evident from Example 4) and the purification of step o1) by active carbons is promising since the removal of the coloration, due to the organic fraction in the protein broth, was efficient.

### Example 4 - Comparison between the desalination of the protein broth obtained according to Example 1 and the protein broth according to Examples 2 and 3

Subsequently to their production, according to Examples 1-3, the protein broths (produced in triplicate) differently filtered, specifically by a single final nanofiltration step 11) in Table 1 and by two filtration steps, specifically a nanofiltration step 11) and a diafiltration step m1) in Tables 2 and 3, were treated according to the method of the invention until the final saline concentrate (brine or saturated solution) is obtained. Said final product was analyzed in order to show the effect of the desalination of the mono-filtered protein broth, obtained according to Example 1 (*i.e.* by a single nanofiltration step 11)), shown in Table 1 and of the protein broth subjected to two filtration steps (a nanofiltration 11) and a diafiltration m1), respectively), obtained according to Examples 2 or 3, on the final product, shown in Tables 2 and 3.

**Table 1**

| | ***Raw material*** | ***l1)*** |
|---|---|---|
| SS | 8.00% | 19.82% |
| Cl⁻ | 0.253% | 0.48% |
| Na⁺ | 0.258% | 0.91% |
| NH₄⁺ | 0.05% | 0.08% |
| Ca²⁺ | 0.22% | 0.35% |
| SO₄²⁻ | 1.38% | 3.54% |
| N_{Org} | 0.77% | 2.28% |
| | | |
| Cl⁻/N_{Org} | 68.83% | 21.05% |
| Na⁺/N_{Org} | 75.32% | 39.91% |
| NH₄⁺/N_{Org} | 6.49% | 3.51% |
| Ca²⁺/N_{Org} | 28.57% | 15.35% |
| SO₄²⁻/N_{Org} | 179.22% | 155.26% |
| | | |
| Δ Cl⁻ | | -69.41% |
| Δ Na⁺ | | -47.01% |
| Δ Ca²⁺ | | -46.27% |
| Δ NH₄⁺ | | -45.96% |
| Δ SO₄²⁻ | | -13.37% |
| | | |
| **mM Na⁺** | **2.52** | **3.96** |
| **mM Cl⁻** | **1.50** | **1.35** |

In Table 1 the data obtained following the desalination by a single nanofiltration step 11) are reported.

**Table 2**

| | ***Raw material*** | ***l1)*** | ***m1)*** |
|---|---|---|---|
| SS | 7.09% | 13.82% | 13.10% |
| Cl⁻ | 0.38% | 0.39% | 0.17% |
| Na⁺ | 0.41% | 0.43% | 0.250% |
| NH₄⁺ | 0.08% | 0.08% | 0.10% |
| Ca²⁺ | 0.12% | 0.14% | 0.31% |
| SO₄²⁻ | 1.17% | 1.19% | 2.34% |
| N_{Org} | 0.68% | 1.37% | 1.31% |
| | | | |
| Cl⁻/N_{Org} | 55.88% | 28.47% | 12.98% |
| Na⁺/N_{Org} | 60.29% | 31.39% | 38.17% |
| NH₄⁺/N_{Org} | 11.76% | 5.84% | 7.63% |
| Ca²⁺/N_{Org} | 17.65% | 10.22% | 23.66% |
| SO₄²⁻/N_{Org} | 172.06% | 86.86% | 178.63% |
| | | | |
| Δ Cl⁻ | | -49.06% | -76.78% |
| Δ Na⁺ | | -47.94% | -36.70% |
| Δ Ca²⁺ | | -42.09% | 34.10% |
| Δ NH₄⁺ | | -50.36% | -35.11% |
| Δ SO₄²⁻ | | -49.52% | 3.82% |
| | | | |
| **mM Na⁺** | **1.78** | **1.87** | **2.17** |
| **mM Cl⁻** | **1.07** | **1.10** | **0.48** |

**Table 3**

| | ***Raw material*** | ***l1)*** | ***ml)*** |
|---|---|---|---|
| SS | 7.21% | 12.77% | 11.38% |
| Cl⁻ | 0.42% | 0.34% | 0.16% |
| Na⁺ | 0.47% | 0.258% | 0.45% |
| NH₄⁺ | 0.05% | 0.06% | 0.04% |
| Ca²⁺ | 0.09% | 0.19% | 0.19% |
| SO₄²⁻ | 1.05% | 1.92% | 1.75% |
| N_{Org} | 0.83% | 1.40% | 1.33% |
| | | | |
| Cl⁻/N_{Org} | 50.60% | 24.29% | 12.03% |
| Na⁺/N_{Org} | 56.63% | 41.43% | 33.83% |
| NH₄⁺/N_{Org} | 6.02% | 4.29% | 3.01% |
| Ca²⁺/N_{Org} | 10.84% | 13.57% | 14.29% |
| SO4²⁻/N_{Org} | 126.51% | 137.14% | 131.58% |
| | | | |
| Δ Cl⁻ | | -52.01% | -76.23% |
| Δ Na⁺ | | -26.84% | -40.25% |
| Δ Ca²⁺ | | 25.16% | 31.75% |
| Δ NH₄⁺ | | -28.86% | -50.08% |
| Δ SO₄²⁻ | | 8.41% | 4.01% |
| | | | |
| **mM Na⁺** | **2.04** | **2.52** | **1.96** |
| **mM Cl⁻** | **1.18** | **0.96** | **0.45** |

In Tables 2 and 3 the data obtained following the desalination by two nanofiltration steps, specifically a nanofiltration step 11) and a diafiltration step m1), are reported.

The data reported in Tables 1-3, show how, by the single and double filtrations, both the sodium ions (Na⁺) and the chloride ions (Cl⁻) are removed.

A net amelioration in the amount of ions present in the protein broth following the double filtration in Tables 2 and 3, with respect to the broth analyzed in Table 1, can be noted.

On average, from the results of Table 2, it is possible to observe how, using a double filtration step 11) and m1) according to the process of the invention, the reduction, by weight, of these two ions is equal to 40.25% (Na⁺) and 76.23% (Cl⁻), respectively.

Observing the sodium and chloride concentration values in moles, an imbalance between Na⁺ and Cl⁻ can be noted. In particular, the sodium is present in a higher amount with respect to the chloride, and this causes an inefficiency in the process of removal of the sodium itself, as well as a low quality of the nanofiltration/diafiltration permeate to be sent to the tanneries.

Therefore, from data shown in Tables 2 and 3, it is evident as the use of two separate membrane filtration steps before the hydrolysis process has allowed to avoid the presence of free ammino acids and small peptides which can permeate the membranes (and therefore being present in the analysis of the permeate of phase 11) and m1)), and therefore not to lose any protein substance in the desalinated, but not yet hydrolyzed, protein broth (*i.e.* in the retentate).

### Example 5 - Preparation of a protein broth by a double filtration step, specifically a first nanofiltration step (11) and a diafiltration step m1), with a previous charge balance in step e1))

The desalinated protein broth was prepared as described below:
a1) 100 kg of fleshing, of the type described above, from tanneries was provided and deposited in a suitable storage tank;
b1) dilution with water, homogenization, and grinding at 50-100 °C for a time from 1 to 3 hours; oxidation/stripping of the sulphides in an oxidizing environment, *i.e.* in H₂O₂ at a concentration of 1% w/w;
c1) acid hydrolysis by 5% by weight sulphuric acid to pH = 4.5 at a temperature of 50-100 °C for a time from 1 to 3 hours;
d1) first separation by centrifugation at 80-90 °C and obtaining of three phases: i) fat phase, ii) salty aqueous phase (or acidic broth), and iii) solid phase (or sludge);
e1) pre-treatment of the salty aqueous phase ii) (or acidic broth) by 5 kg of calcium carbonate (CaCO₃) as a filtration adjuvant, 0.65 kg of lime (Ca(OH)₂) as a base, and 0.65 kg of CaCl₂*2H₂O as a salt corrector, at a temperature from 50 to 100 °C, for a time from 1 to 3 hours;
f1) second separation by filtration at 80-90 °C;
11) membrane nanofiltration with a cut-off of 150-300 Da to obtain: 50 kg of a homogeneous and partially desalinated broth v) and 50 kg of a salty permeate (diluted brine) vi). 50 kg of demineralized or osmotized water are added to the homogeneous and partially desalinated broth v).
m1) membrane nanofiltration (diafiltration) with a cut-off of 150-300 Da of the homogeneous and partially desalinated broth v) of step 11) to obtain further two fractions: 50 kg of a final homogeneous and desalinated broth vii) and 50 kg of a salty permeate viii).

The addition of calcium chloride (CaCl₂) in step e1) previously to the nanofiltration step (11) and the diafiltration step (m1), on the one hand, balances the molar ratios between sodium and chloride by adding the latter anion and, on the other hand, causes the precipitation of gypsum (CaSO₄) by reaction between the calcium ion of CaCl₂ and the sulphates already present in the acidic broth, leading to an efficient desalination of the final hydrolyzed protein broth.

Then a series of tests were carried out wherein at the salty aqueous phase ii) (or acidic broth) of step d1) a predeterminate amount of CaCl₂ is addedin order to reach the stoichiometric parity between sodium and chloride.
Table 4 summarizes the results obtained in the above described tests:

**Table 4**

| | ***Raw material*** | ***l1) fraction v)*** | ***m1) fraction vii)*** |
|---|---|---|---|
| SS | 8.41% | 15.87% | 16.32% |
| Cl⁻ | 0.66% | 0.258% | 0.26% |
| Na⁺ | 0.252% | 0.255% | 0.39% |
| NH₄⁺ | 0.06% | 0.07% | 0.06% |
| Ca²⁺ | 0.20% | 0.39% | 0.41% |
| SO₄²⁻ | 1.13% | 2.26% | 2.40% |
| N_{Org} | 0.84% | 1.64% | 1.72% |
| | | | |
| Cl⁻/N_{Org} | 78.57% | 35.37% | 15.12% |
| Na⁺/N_{Org} | 61.90% | 33.54% | 22.67% |
| NH₄⁺/N_{Org} | 7.14% | 4.27% | 3.49% |
| Ca²⁺/N_{Org} | 23.81% | 23.78% | 23.84% |
| SO₄²⁻/N_{Org} | 134.52% | 137.80% | 139.53% |
| | | | |
| Δ Cl⁻ | | -54.99% | -80.76% |
| Δ Na⁺ | | -45.83% | -63.37% |
| Δ Ca²⁺ | | -0.12% | 0.24% |
| Δ NH₄⁺ | | -40.24% | -51.16% |
| Δ SO₄²⁻ | | 2.44% | 3.73% |
| | | | |
| **mM Na⁺** | **2.26** | **2.39** | **1.70** |
| **mM Cl⁻** | **1.86** | **1.64** | **0.73** |

From Table 4, first of all, it is possible to observe how the broth, after step e1), shows an almost parity in the molar concentration of sodium and chloride.

Regarding the discharge of the two ions, it is found, as expected, a better efficiency in the sodium discharge, in fact, on average, the reduction by weight of this ion is equal to 63.37% (*cfr.* 40.25%). Instead, for the chloride, the reduction is 80.76%, therefore comparable to that already observed (*cfr.* 76,23%). From data of Table 4 it is found how the sodium (Na⁺), even if similar in moles to the chloride (Cl⁻), is in excess anyhow. This can be balanced from a further addition of calcium chloride (CaCl₂); however, it is important not to exceed with this additive in order not to increase excessively the chloride (Cl⁻) with respect to the sodium (Na⁺). The not perfect balance of the charges is due also to the variability of the incoming product, therefore it is preferred, for the reasons set forth above, not to exceed with this additive.

### Example 6 - Preparation of a desalinated protein hydrolysate by the method of the invention

The desalinated protein broth was prepared as described below:
a1) 100 kg of fleshing, of the type described above, from tanneries, was provided and deposited in a suitable storage tank;
b1) dilution with water, homogenization, and grinding at 50-100 °C for a time from 1 to 3 hours; oxidation/stripping of the sulphides in an oxidizing environment, *i.e.* in H₂O₂ at a concentration of 1% w/w;
c1) acid hydrolysis by 5% by weight sulphuric acid to pH = 4.5 at a temperature of 50-100 °C for a time from 1 to 3 hours;
d1) first separation by centrifugation at 80-90 °C and obtaining of three phases: i) fat phase, ii) salty aqueous phase (or acidic broth), and iii) solid phase (or sludge);
e1) pre-treatment of the salty aqueous phase ii) (or acidic broth) by 5 kg of calcium carbonate (CaCO₃) as a filtration adjuvant, 0.65 kg of lime (Ca(OH)₂) as a base, and 0.65 kg of CaCl₂*2H₂O as a salt corrector, at a temperature from 50 to 100 °C, for a time from 1 to 3 hours;
f1) second separation by filtration at 80-90 °C;
11) membrane nanofiltration with a cut-off of 150-300 Da to obtain: 50 kg of a homogeneous and partially desalinated broth v) and 50 kg of a salty permeate (diluted brine) vi). 50 kg of demineralized or osmotized water are added to the homogeneous and partially desalinated broth v).
m1) membrane nanofiltration (diafiltration) with a cut-off of 150-300 Da of the homogeneous and partially desalinated broth v) of step 11) to obtain further two fractions: 50 kg of a final homogeneous and desalinated broth vii) and 50 kg of a salty permeate viii).
n1) filtration by reverse osmosis of the salty permeate vi) of step 11) and of the salty permeate viii) of step m1), to obtain a crude saline concentrate (raw brine) having a dry residue of 8%;
o1) concentration and purification of the crude saline concentrate (raw brine) and crystallization of said saline concentrate (brine or saturated solution) by crystallization in an evaporator under vacuum to obtain a final saline concentrate (brine or saturated solution) and sodium chloride;
p1) mixing of the solid phase iii) obtained in step d1), the residues of phase iii) obtained in step f1) and the final homogeneous and desalinated broth vii) obtained in step m1), and subsequent hydrolysis and sterilization of the mixture thus obtained to obtain a desalinated protein hydrolysate.

The hydrolysis of step p1) is carried out at pH 10-13 for 3-5 hours at T 90-145 °C.

### Example 7 - Characterization of the desalinated protein hydrolysate obtained according to Example 6

The desalinated protein hydrolysate of Example 6 was analyzed and the values of the salts therein contained are reported in Tables 5 and 6:

**Table 5**

| | ***Raw material*** | ***l1)*** | ***m1)*** |
|---|---|---|---|
| SS | 7.07% | 12.72% | 12.66% |
| Cl⁻ | 0.255% | 0.255% | 0.28% |
| Na⁺ | 0.36% | 0.44% | 0.30% |
| NH₄⁺ | 0.08% | 0.09% | 0.06% |
| Ca²⁺ | 0.25% | 0.48% | 0.47% |
| SO₄²⁻ | 0.82% | 1.56% | 1.55% |
| N_{Org} | 1.06% | 1.72% | 1.79% |
| | | | |
| Cl⁻/N_{Org} | 51.89% | 31.98% | 15.64% |
| Na⁺/N_{Org} | 33.96% | 25.58% | 16.76% |
| NH₄⁺/N_{Org} | 7.28% | 5.23% | 3.59% |
| Ca²⁺/N_{Org} | 23.58% | 27.91% | 26.26% |
| SO₄²⁻/N_{Org} | 77.36% | 90.70% | 86.59% |
| | | | |
| Δ Cl⁻ | | -38.37% | -69.85% |
| Δ Na⁺ | | -24.68% | -50.65% |
| Δ Ca²⁺ | | 18.33% | 11.33% |
| Δ NH₄⁺ | | -28.10% | -31.36% |
| Δ SO₄²⁻ | | 17.24% | 11.94% |
| | | | |
| **mM Na⁺** | **1**.**57** | **1.91** | **1.30** |
| **mM Cl⁻** | **1.55** | **1.55** | **0.79** |

The above desalinated protein hydrolysate was compared to a hydrolysed but not desalinated broth by the method of the present invention.

The results are reported in Table 6.

**Table 6**

| | ***Desalinated protein hydrolysate*** | ***Not-desalinated protein hydrolysate*** |
|---|---|---|
| %N_{Org} | 7.2 | 7.2 |
| %Ca²⁺ | 0.23 | 0.12 |
| %Cl⁻ | 4.06 | 1.24 |
| %Na⁺ | 4.40 | 1.51 |
| %SO₄²⁻ | 1.03 | 1.89 |

Comparing the values obtained with the average values of the analogue product obtained from not-desalinated broth, with the same organic nitrogen, it is shown that the sodium amount changes from 4.40% to 1.51% and the chloride amount changes from 4.06% to 1.24%.

### Example 8 - Analysis of the not-desalinated hydrolyzed broth, and comparison with not-desalinated hydrolyzed broth subjected to a membrane filtration of step 11)

Three different samples were provided:
1) a not-desalinated hydrolyzed broth (x), obtained according to the process described in Example 1 of patent ITVI97A000134.

The hydrolyzed broth (x) was subjected, before the concentration process of step o1), to a membrane nanofiltration step 11) with a cut-off of 150-300 Da, thus obtaining:
2) a fraction corresponding to 50% w/w of the initial broth (x) of a desalinated retentate (y); and
3) a fraction corresponding to 50% w/w of the initial broth (x) of a permeate rich in sodium chloride (z).

The not-desalinated broth (x), the retentate (y), and the permeate (z) were analyzed and the values of the salts therein contained are reported in Table 7:

**Table 7**

| | ***Not-desalinated broth (x)*** | ***Retentate (y)*** | ***Permeate (z)*** |
|---|---|---|---|
| SS | 5.38% | 9.39% | 1.28% |
| Cl⁻ | 0.34% | 0.24% | 0.45% |
| Na⁺ | 0.37% | 0.253% | 0.25% |
| NH₄⁺ | 0.32% | 0.43% | 0.21% |
| Ca²⁺ | 0.00% | 0.00% | 0.00% |
| SO₄²⁻ | 0.09% | 0.19% | 0.00% |
| N_{Org} | 0.251% | 0.95% | 0.07% |
| | | | |
| Cl⁻/N_{Org} | 66.67% | 25.26% | 642.86% |
| Na⁺/N_{Org} | 72.55% | 55.79% | 357.14% |
| NH₄⁺/N_{Org} | 62.75% | 45.26% | 300.00% |
| Ca²⁺/N_{Org} | 0.00% | 0.00% | 0.00% |
| SO₄²⁻/N_{Org} | 17.65% | 20.00% | 0.00% |
| | | | |
| Δ Cl⁻ | | -62.11% | 864.29% |
| Δ Na⁺ | | -23.10% | 392.28% |
| Δ Ca²⁺ | | - | - |
| Δ NH₄⁺ | | -27.86% | 378.13% |
| Δ SO₄²⁻ | | 13.33% | -100.00% |
| | | | |
| **mmol Na⁺** | **31.543** | **24.256** | **155.280** |
| **mmol Cl⁻** | **18.806** | **7.126** | **181.342** |
| **mM Na⁺** | **1.61** | **2.30** | **1.09** |
| **mM Cl⁻** | **0.96** | **0.68** | **1.27** |

Therefore, from the data shown in Table 7 and considering that the used membrane has a molecular weight cut-off of 150-300 Da, it is shown that a permeate rich in free amino acids, peptides, and salts (sodium chloride and ammonium chloride) and a partially desalinated retentate containing higher molecular weight fractions are obtained.

## Claims

1. A process for obtaining a desalinated protein broth starting from a substrate (raw material) selected from a substrate that is a by-product of animal origin or a waste (debris material) of animal origin, comprising the steps of:
a1) optional storage of the raw material;
b1) grinding with homogenization and optional dilution of the raw material, and heating, optionally in an oxidizing environment;
c1) acid hydrolysis by adding an acid selected from sulfuric acid, hydrochloric acid, nitric acid, acetic acid, preferably sulfuric acid;
d1) first separation by means of a technique selected from filtration, centrifugation, and decantation, preferably centrifugation, to obtain at least three phases:
i) fat phase,
ii) salty aqueous phase (or acidic broth), and
iii) solid phase (or sludge);
e1) pre-treatment of phase ii) (or acidic broth), by adding a filtration adjuvant to obtain a homogeneous salty aqueous phase ii) (or acidic broth); wherein a salt corrector selected from the group comprising Na₂SO₄, NaNO₃, CH₃COONa, CaCl₂, KCl, and MgCl₂, preferably CaCl₂, and a pH corrector which is a base selected from the group comprising Ca(OH)₂, NaOH, Mg(OH)₂, KOH, NH₃, preferably Ca(OH)₂, more preferably to a pH comprised between 6.0 and 8.0, even more preferably equal to 7.0, are further added;
f1) second separation by means of a technique selected from filtration, centrifugation, and decantation, preferably filtration, to separate the residues of phase iii) and obtain a homogeneous salty aqueous phase ii) (or neutral broth) substantially or completely free of suspended solids;
g1) optional addition of a precipitating agent to the salty aqueous phase ii) of step f1), to obtain a suspension iv);
h1) optional separation of the suspension iv) of step g1) by means of a technique selected from filtration, centrifugation, and decantation, preferably nanofiltration, to separate the solid residues from the suspension iv) of step g1) and obtain a homogeneous salty aqueous phase ii) (or neutral broth) substantially or completely free of suspended solids;
11) first membrane filtration of the homogeneous salty aqueous phase ii) (or neutral broth) of step f1) and of optional step h1) to obtain a homogeneous and partially desalinated broth v) and a salty permeate (diluted brine) vi);
m1) optional second membrane filtration of the homogeneous and partially desalinated broth v) of step 11) to obtain two fractions: a final homogeneous and desalinated broth vii) and a salty permeate viii);
n1) filtration of the salty permeate vi) of step 11) and/or of the salty permeate viii) of step m1) to obtain a crude saline concentrate (raw brine) and permeated desalinated water ix);
o1) concentration and purification of the crude saline concentrate to obtain a final saline concentrate (brine or saturated solution) and optionally crystallization of said final saline concentrate (brine or saturated solution) to obtain sodium chloride.

2. A process according to claim 1, further comprising a step p1) of mixing the solid phase iii) obtained in step d1), the residues of phase iii) obtained in step f1) and the final homogeneous and desalinated broth vii) obtained in step m1), and subsequent hydrolysis of the mixture thus obtained to obtain a desalinated protein hydrolysate.

3. A process according to claim 1 or 2, wherein the by-product of animal origin is a subcutaneous tissue deriving from the scraping operations of the animal hides before being subjected to a tanning process, preferably it is a fleshing or consists of animal hide residues before being subjected to a tanning process, even more preferably it is a fleshing.

4. A process according to any one of claims 1-3, wherein in step b1) the oxidizing environment is obtained by adding an oxidizing compound selected from the group comprising or consisting of H₂O₂, NaClO, O₃, preferably it is H₂O₂, more preferably it is H₂O₂ in a concentration between 0.25% and 5% w/w (weight/weight).

5. A process according to any one of claims 1-4, wherein in step c1) the acid, preferably sulfuric acid, is added until a pH between 1 and 6, preferably a pH between 2 and 5, more preferably 4.5 is reached, at a temperature ranging from 50 to 100 °C, preferably from 70 to 90 °C and for a time from 1 to 3 hours, preferably from 1 to 2 hours, more preferably 1 hour.

6. A process according to any one of claims 1-5, wherein step d1) of first separation, preferably by centrifugation, is carried out in a centrifuge at a temperature ranging from 70 to 100 °C, preferably at 80-90 °C.

7. A process according to any one of claims 1-6, wherein in step e1) the filtration adjuvant is calcium carbonate.

8. A process according to any one of claims 1-7, wherein step e1) is carried out at a temperature from 50 to 100 °C, for a time from 1 to 3 hours.

9. A process according to any one of claims 1-8, wherein step f1) of second separation is carried out by means of a technique selected from filtration, centrifugation, and decantation, preferably filtration.

10. A process according to any one of claims 1-9, wherein step 11) of first membrane filtration consists of a technique selected from microfiltration, nanofiltration, and ultrafiltration, preferably nanofiltration.

11. A process according to any one of claims 1-10, wherein step m1) of second membrane filtration consists of a technique selected from microfiltration, nanofiltration, and ultrafiltration (diafiltration), preferably diafiltration.
